Europäisches Patentamt

European Patent Office

Office européen des brevets

(11) Numéro de publication: **0 300 883**
**A1**

## (12) DEMANDE DE BREVET EUROPEEN

(21) Numéro de dépôt: **88401833.4**

(22) Date de dépôt: **13.07.88**

(51) Int. Cl.⁴: **F 16 D 1/10**
**B 62 D 1/16**

(30) Priorité: **20.07.87 FR 8710235**

(43) Date de publication de la demande:
**25.01.89 Bulletin 89/04**

(84) Etats contractants désignés:
**BE DE ES GB IT NL SE**

(71) Demandeur: **ECIA - EQUIPEMENTS ET COMPOSANTS POUR L'INDUSTRIE AUTOMOBILE**
**F-25400 Audincourt (FR)**

(72) Inventeur: **Hoblingre, André**
**28, Rue Vincent d'Indy**
**F-25700 Valentigney (FR)**

**Barnabe, Jean Pierre**
**17, Combe Saint Germain**
**F-25700 Valentigney (FR)**

**Mouhot, Frédéric**
**5, Rue des Vergers**
**F-25420 Voujeaucourt (FR)**

(74) Mandataire: **de Morgues, Marie Emma et al**
**Cabinet Lavoix 2, place d'Estienne d'Orves**
**F-75441 Paris Cédex 09 (FR)**

(54) Liaison rapide entre deux pièces de transmission de couple.

(57) Cette liaison comporte à une extrémité de l'une des pièces une douille (1) contenant des grains ou secteurs coulissants (4) guidés par des cannelures (6, 8). Un ressort (10) repousse ces grains vers l'extérieur, tandis que des taquets (16) portés par des branches élastiques centrales (14) les retiennent. La seconde pièce comporte une tige (30) terminée par une tête pyramidale (32) ayant une cavité extrême tronconique qui vient coiffer les extrémités des branches, et en les rapprochant escamotent les taquets (14). La tête pyramidale est instantanement bloquée par le ressort entre les grains, la douille, et des butées élastiques (24) interdisant son retrait.

FIG. 1

**Description**

## Liaison rapide entre deux pièces de transmission de couple

L'assemblage de deux pièces de transmission de couple est actuellement effectué au moyen d'organes tels que des colliers, systèmes vis-écrous ou autres qui, pour assurer une solidarisation efficace et sure, exigent lors du montage une manoeuvre précise et un effort de serrage bien déterminé relativement difficile à contrôler par l'opérateur.

La présente invention a pour but de remédier à ces inconvenients en réalisant une liaison rapide qui permette d'assembler deux pièces de transmission de couple par une manoeuvre simple n'exigeant aucune précision particulière, en assurant à la fois une tenue axiale et une tenue au couple de chacune d'elles sans jeu angulaire.

Cette invention a en effet pour objet une liaison rapide entre deux pièces dont l'une est terminée par une douille tandis que l'autre est terminée par une tige comportant une tête d'emboîtement dans la douille, caractérisée en ce que la douille contient pluiseurs grains ou secteurs qui sont susceptibles de coulisser le long de sa paroi, vers l'extrémité ouverte de celle-ci sous l'action d'un ressort mais sont bloqués contre cette paroi par des taquets escamotables tandis que la tête comporte une cavité centrale tronconique de réception et d'escamotage des taquets et a une forme pyramidale et des faces extérieures inclinées contre lesquelles viennent appuyer les grains dès que les taquets les libèrent, des butées élastiques limitant le recul de la tête.

Selon un mode de réalisation préféré la liaison comporte une rondelle élastique ouverte qui est munie de languettes en saillie à l'intérieur de la douille et coopérant avec un épaulement de la tête de la tige pour interdire la sortie de cette dernière lorsqu'elle a pénètré à l'intérieur de la douille.

Par ailleurs la douille comporte intérieurement des cannelures longitudinales et chacun des grains comportent des cannelures périphériques en prise avec celles de la douille.

Grâce à ces dispositions, il suffit de faire pénètrer suffisamment la tête de la tige à l'intérieur de la douille pour escamoter les taquets de retenue des grains et permettre à ceux-ci de venir se bloquer entre la tête et la douille de sorte que ces éléments sont à la fois solidaires en rotation et axialement sans aucun jeu angulaire.

Selon un mode de réalisation, la douille contient une plaque transversale fixée sur elle dont partent au moins deux branches longitudinales élastiques en contact avec la partie centrale des grains et les maintenant en prise avec la douille.

Ces branches élastiques portent chacune un taquet de retenue d'un grain et sont rapprochées les unes des autres par les bords de la cavité tronconique de la tête de la tige, ce qui escamote les taquets et libère et ressort qui repousse les grains.

La description ci-dessous de modes de réalisation, donnés à titre d'exemples non limitatifs et représentés aux dessins annexés, fera d'ailleurs ressortir les avantages et caractéristiques de l'invention.

Sur ces dessins :

- la Fig.1 est une vue en coupe longitudinale selon la ligne 1-1 de la Fig. 3 d'une liaison rapide avant son emboîtement complet ;

- la Fig. 2 est une vue analogue à la Fig.1 d'une liaison rapide totalement assemblée ;

- la Fig. 3 est une vue en coupe selon la ligne 3-3 de la Fig. 2 ;

- la Fig. 4 est une vue en coupe suivant la ligne 4 de la Fig.2 ;

- la Fig. 5 est une vue en coupe suivant la ligne 5 de la Fig. 2 ;

- la Fig. 6 est une vue en coupe de la pièce portant les taquets de retenue des grains suivant une variante de réalisation ;

- la Fig. 7 est une vue en perspective de la tige munie de la tête pyramidale.

La liaison rapide, objet de l'invention comporte, comme le montre les dessins, à l'extrémité de l'une des pièces à réunir une douille cylindrique 1 qui dans l'exemple représenté est rétrécie à son extrémité pour former une portion tronconique 2 suivie d'une entrée de plus petit diamètre 3.

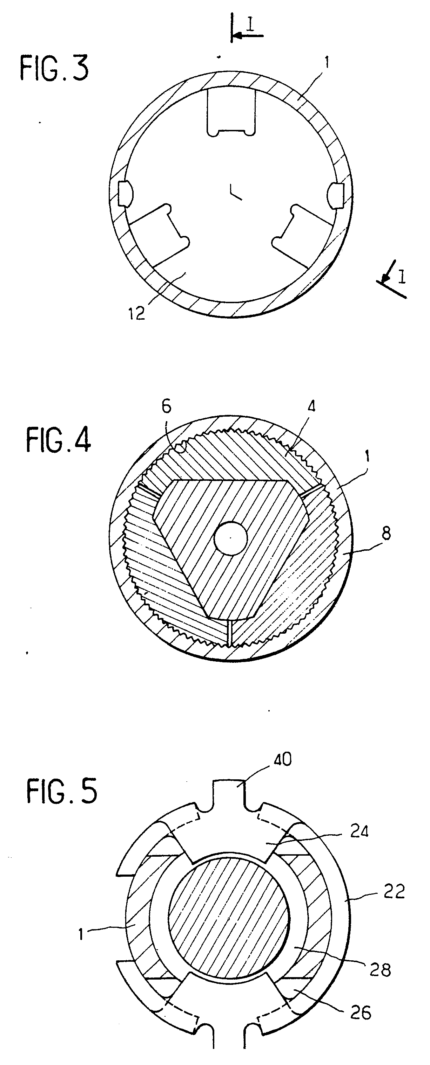

A l'intérieur de la douille 1 sont montés coulissant des grains ou secteurs 4, au nombre de 3 dans l'exemple de réalisation représenté, dont la surface extérieure en forme de portion de cylindre est munie de cannelures 6 qui sont en prise avec des cannelure de forme correspondante 8 de la surface interne de la douille (Fig. 4). En section droite longitudinale, ils ont une forme générale trapézoïdale, leur épaisseur décroissant en direction de l'ouverture de la douille de sorte que leurs faces internes sont inclinées et s'évasent vers cette ouverture. Ces grains 4 sont repoussés vers l'entrée de la douille par un ressort hélicoïdal 10 qui est serré entre eux et une plaquette 12 fixée transversalement dans la douille 1. De la plaquette 12 partent plusieurs branches élastiques longitudinales 14, trois dans le mode de réalisation représenté, qui se dirigent vers l'entrée 3 de la douille et forment une surface de glissement pour la face interne des grains 4. Chacune de ces branches 14 portent un taquet 16 contre lequel vient appuyer un épaulement 18 du grain correspondant 4.

De l'épaulement 18 à son extrémité éloignée du ressort 10 la face interne 19 de chacun des grains 4 est inclinée de façon à s'éloigner de l'axe de la douille et à dégager l'espace qui entoure l'extrémité 20 de chacune de branches 14 afin d'en permettre l'accès.

La partie étroite d'entrée 3 de la douille est par ailleurs entourée par une rondelle élastique 22 sensiblement en forme de C comportant deux languettes 24 diamétralement opposées qui sont recourbées vers l'intérieur et traversent des fentes 26 de la douille 3 pour faire saillie à l'intérieur de cette dernière et pénétrer dans une gorge périphérique 28 ménagée dans une tige 30 solidaire de la seconde pièce à assembler.

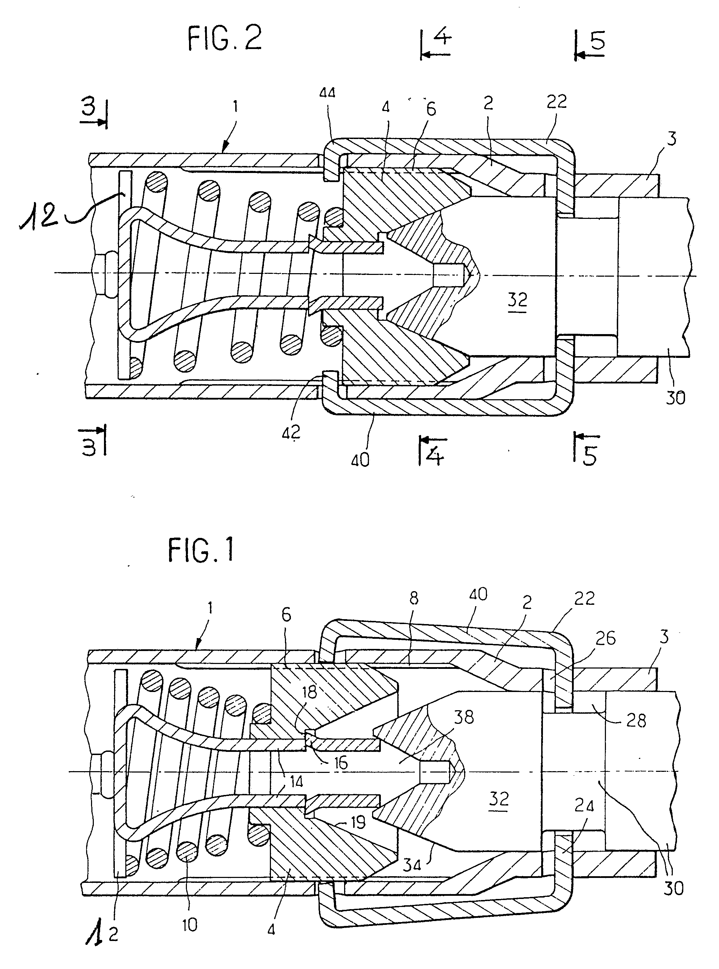

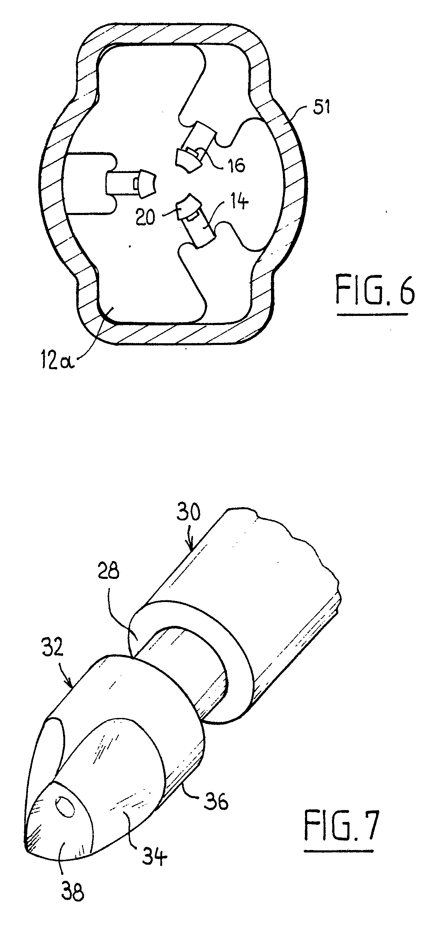

La tige 30 comporte en outre une tête pyramidale 32 qui est séparée du corps de la tige par la gorge 28. Dans le mode de réalisation représenté (Fig. 7) la tête 32 a trois faces inclinées 34 qui correspondent chacune à l'un des grains 4 et à l'une des branches 14. Ces faces 34 sont séparées de la gorge 28 par une portion cylindrique 36 et forment la pointe de la tête. Cette pointe est toutefois creuse, la tête 32 comportant une cavité extrème 38 de forme sensiblement tronconique c'est à dire s'évasant vers l'extérieur ainsi que le montre clairement les Fig. 1, 2 et 7.

Avant l'assemblage, c'est à dire lorsque la tige 30 et sa tête 32 sont à l'extérieur de la douille 1, les grains 4 sont dans la position représentée sur la Flg. 1, c'est à dire qu'ils sont retenus par les taquets 16, contre l'action du ressort 10. La tête 32 de la tige 30 peut alors être introduite dans l'entrée 3 de la douille 1. Sa forme pointue lui permet de passer entre les languettes 24 en les écartant jusqu'au moment où elles peuvent retomber dans la gorge 28, comme représenté sur la Fig. 1, et ainsi interdire le retour en arrière de la tête 32.

A ce moment les bords de la cavité conique 38 de la tête 32, sont en regard des extrémités 20 des branches 14 mais aucun verrouillage n'est établi. Un déplacement axial complémentaire de la tête 32 suffit toutefois pour mettre en contact la cavité 38 et les branches 20 qui se rapprochent progressivement l'une de l'autre au fur et à mesure de leur pénétration à l'intérieur de la cavité 38 de sorte que les taquets 16 quittent peu à peu les épaulements 18 des grains 4.

Dès que les grains 4 sont libérés des taquets 16 le ressort 10 les repousse en direction de la tête 32 ou plus exactement de l'entrée 3 de la douille 1. Leurs faces évasées viennent appuyer sur les faces 34 de la tête 32 et repoussent cette dernière en direction de l'entrée 3. La tête 32 est alors bloquée entre les grains 4 et la rondelle 22, ou plus exactement les languettes 24, et est maintenue dans cette position par le ressort 10 de sorte que les deux pièces à assembler sont rigoureusement solidaires axialement, les jeux axiaux étant rattrapés par le ressort. Ces pièces sont également solidaires en rotation grâce à la forme pyramidale de la tête 32 et à la présence des cannelures reliant les grains ou secteurs à la douille 1, aucun jeu angulaire ne subsiste donc entre les pièces.

Dans certains cas il peut toutefois être utile de renforcer cet assemblage en utilisant une rondelle 22 munie de deux bras longitudinaux 40 diamètralement opposés qui sont recourbés à leurs extrémités en 42 pour pénétrer dans des trous 44 de la douille 1. Avant l'assemblage les extrémités 42 des bras 40 sont logés dans les trous 44 mais sont arrêtés par la face externe cannelée des grains 4. Par contre, lorsque les grains 4 sont dans leur position avant de verrouillage, les extrémités 42 font saillie à l'intérieur de la douille 1 derrière les grains et assurent un maintien de sécurité des grains en substituant leur action à celle du ressort 10 en cas de défaillance de celui-ci.

La forme de la plaquette 12 peut varier selon les pièces à assembler entre elles et les exigences du dispositif à réaliser. Par exemple, comme représenté sur la Fig. 3 cette plaquette peut avoir une forme circulaire pour être fixée à l'intérieur d'une douille cylindrique de section circulaire. Elle peut également comme la plaquette 12a représentée sur la Fig. 6 avoir une forme plus complexe correspondant également à celle de la section d'une douille 51. On comprendra toutefois facilement que la forme de la plaquette 12 peut être différente de celle de la section de la douille 1 et qu'une plaquette circulaire 12 peut par exemple être fixée dans la douille 51, cette plaque ayant simplement pour but de servir d'appui au ressort 10 et de support aux branches élastiques 14.

De la même manière le nombre des branches 14 et des grains et ainsi que celui des faces extérieures de la tête 32 peuvent varier avec les utilisations et la nature des pièces à assembler, ces nombres ainsi que l'angle du sommet de la pyramide de la tête 32 étant notamment fonction des couples à transmettre.

Quel que soit son mode de réalisation la liaison rapide, objet de l'invention, permet d'obtenir un assemblage assurant un rattrapage de jeu automatique dans toutes les directions par une manoeuvre extrèmement simple et particulièrement sure et facile à contrôler.

En effet si l'introduction de la tête 32 n'est pas compète et n'assure pas le verrouillage, il ne peut y avoir d'entraînement en rotation de l'une des pièces par l'autre.

Une telle liaison est adaptée à des pièces très diverses mais elle est particulièrement utile chaque fois que les deux pièces à assembler doivent être entraînées ensemble en rotation ce qui est le cas par exemple d'un volant et d'un axe de volant ou de la queue d'un pignon de crémaillère et d'un axe de volant.

En outre, cette liaison étant établie par un simple effort d'emboîtement des deux pièces qui, grâce aux formes de la tête pyramidale et des grains, se centrent automatiquement l'une par rapport à l'autre, permet l'asemblage de pièces dont l'accès est difficile et peut même être mis en place par un robot.

**Revendications**

1. Liaison rapide entre deux pièces dont l'une est terminée par une douille (1), tandis que l'autre est terminée par une tige (30) comportant une tête (32) d'emboîtement dans la douille, caractérisée en ce que la douille (1) contient plusieurs grains ou secteurs (4) qui sont susceptibles de coulisser le long de sa paroi, vers l'extrémité ouverte (3) de celle-ci sous l'action d'un ressort (10) mais sont retenus axialement par des taquets escamotables (16) tandis que la tête comporte une cavité centrale tronconique (38) de réception et d'escamotage des taquets (16) et a une forme pyramidale et des faces extérieures inclinées (34) contre lesquelles viennent appuyer les grains dès que les taquets les libèrent, des butées élastiques limitant le recul de la tête.

2. Liaison rapide suivant la revendication 1, caractérisée en ce qu'elle comporte une rondelle élastique ouverte (22) montée autour de la douille et munie de languettes (24) en saillie à l'intérieur de cette dernière qui coopèrent avec un épaulement arrière de la tête (32) de la tige au blocage de la tête dans la douille.

3. Liaison rapide suivant la revendication 1 et 2, caractérisée en ce que la surface extérieure de chacun des grains (4) est munie de cannelures longitudinales (6) en prise avec des cannelures internes (8) de la douille.

4. Liaison rapide suivant l'un des revendications 1 à 3, caractérisée en ce que la douille (1) contient et immobilise une plaquette transversale (12) d'où partent au moins deux branches longitudinales élastiques (14) en contact avec la partie centrale des grains et les maintenant en prise avec la douille.

5. Laison rapide suivant la revendication 4, caractérisée en ce que les branches (14) portent chacune un taquet (16) d'arrêt d'un grain et sont rapprochées les unes des autres par leur pénétration dans la cavité (38) de la tête (32).

6. Liaison rapide suivant l'une des revendications précédentes, caractérisée en ce que la tête (32) comporte des faces extérieures inclinées (34) qui correspondent chacune à la surface intérieure d'un grain (4).

7. Liaison rapide suivant l'une des revendication 2 à 6, caractérisée en ce que la rondelle élastique ouverte de retenue (22) comporte deux bras élastiques (40) terminés chacun par un crochet (42) traversant un orifice (44) de la douille et venant garantir un appui de sécurité contre le fond d'un grain en position de verrouillage en cas de défaillance du ressort 10.

8. Liaison rapide suivant l'une des revendications 4 à 7, caractérisée en ce que le ressort (10) agissant sur les grains (4) est un ressort hélicoïdal monté entre la plaquette transversale (12) et ces derniers.

9. Liaison rapide suivant l'une des revendications 4 à 8, caractérisée en ce que la plaquette transversale (12) a une forme analogue à la section de la douille (1).

10. Liaison rapide suivant l'une des revendications 4 à 8, caractérisée en ce que la plaquette (12) n'occupe qu'une partie de la section de la douille.

11. Liaison rapide suivant l'une des revendications précédentes, caractérisée en ce que la douille (1) comporte une partie d'entrée (3) de diamètre réduit correspondant à celui de la tige (30) solidaire de l'autre organe à assembler.

0300883

FIG.2

FIG.1

0300883

FIG.3

FIG.4

FIG.5

0300883

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 999 769 (BAYER) <br> * En entier * <br> --- | 1,3,8,9 | F 16 D 1/10 <br> B 62 D 1/16 |
| Y | US-A-1 552 343 (QUINN) <br> * En entier * <br> --- | 1,3,8,9 | |
| Y | DE-A-2 032 441 (PETER) <br> * En entier * <br> ----- | 3 | |

**DOMAINES TECHNIQUES RECHERCHES (Int. Cl.4)**

F 16 D 1/00
B 62 D
B 23 B

**Le présent rapport a été établi pour toutes les revendications**

| Lieu de la recherche | Date d'achèvement de la recherche | Examinateur |
|---|---|---|
| LA HAYE | 30-09-1988 | BALDWIN D.R. |

EPO FORM 1503 03.82 (P0402)